# EUROPEAN PATENT APPLICATION

(11) **EP 2 919 315 A1**
(43) Date of publication of application: **16.09.2015**
(21) Application number: 13853778.2
(22) Date of filing: 16.10.2013
(51) Int. Cl.: H01M 10/48, H01H 9/20

(54) **DEVICE FOR LOCKING BATTERIES AND METHOD FOR USING SAME**

(30) Priority: 09.11.2012 ES 201231711
(71) Applicant: Micó Pérez, Enrique, 46006 Valencia (ES); Albert Albuger, Raul, 46025 Valencia (ES)
(72) Inventor: Micó Pérez, Enrique, 46006 Valencia (ES); Albert Albuger, Raul, 46025 Valencia (ES)
(74) Representative: Carlos Hernando, Borja
(86) International application number: PCT/ES2013/070707
(87) International publication number: WO 2014/072549

(57) **Abstract**

The present invention relates to a battery locking device and method of use thereof, comprising electronic means (2) connected with the battery (1), and in turn controlling a fastener (3) keeping the battery (1) secured to the machine and characterized in that said electronic means (2) consist of a signal conditioner circuit for the signal from the battery (1) and a voltage divider providing a fixed voltage value corresponding with a threshold charging voltage value of said battery (1), the output of both circuits being connected as inputs of a third comparator circuit; and where the output of the comparator is connected with an input of a microcontroller connected with a bistable solenoid controlled by two relays, such that when the solenoid is activated the fastener (3) fixing the battery (1) is released and a warning is activated.

## Description

The object of the present invention is a battery locking device and the method of use thereof, the purpose of which is to prevent removing batteries from their location for subsequent replacement with another already charged battery by acting like a lock, preventing being able to remove the battery as long as said batteries have a minimum charge established as "low battery".

### Background of the invention

When replacing batteries such as in an electric platform trolley today, for example, given the difficulties in knowing the actual state of charge of the battery, as a general rule it is usually replaced and/or charged when the battery is completely depleted, or when the operator or user understands that the battery working life is reaching its end.

This means that during machine working and/or use times, said machine cannot be used due to the lack of charge or because the batteries are being handled incorrectly, being changed when it is still not necessary, which involves an extra economic expense in both cases.

### Description of the invention

The object of the present invention is a device that knows the actual state of the battery, locking it provided that it has a charge level in volts exceeding an established threshold corresponding to an approximate charge of at least 25% of its rated maximum charge, and unlocking it when said charge is less than said 25%.

Any user is prevented from being able to handle and/or replace the battery before it actually needs to be charged as a result of this device. To that end, the battery locking device object of the present invention is essentially characterized in that it comprises first electronic means connected with a battery by means of cables transmitting the voltage of the battery and comparing it with a fixed voltage obtained from a voltage divider, such that a microcontroller determines if it is necessary to replace the battery which another fully charged battery, and if said battery must be replaced, a warning (conventionally a LED diode) is activated and a spring securing the battery by means of two relays associated with a bistable solenoid is released.

In a second aspect of the invention, the battery locking method, of the type implemented in the preceding device, comprises at least the steps of (i) establishing the instantaneous charging voltage value of the battery and comparing it with a voltage value corresponding with the minimum charging threshold of the battery; and (ii) determining if the instantaneous voltage value in the battery is higher or lower than the threshold voltage, such that if the result indicates that the battery is low, the battery is released, releasing the fastener by actuating the relays feeding a bistable solenoid controlling the fastener of the battery and activating a warning signal.

As a result, it prevents irregularly charging the battery (for example, before reaching values below the threshold, about 25% of its charge), improving the battery charging cycle and therefore the battery service life. As a result, the time dedicated to replacing and/or charging batteries is in turn reduced, increasing the service time of the machine, thereby generating economic saving.

The word "comprise" and variants thereof throughout the description and claims do not seek to exclude other technical features, techniques, additives, components or steps. Other objects, advantages and features of the invention will be obvious for persons skilled in the art due in part to the description and in part to the practice of the invention. The following examples and drawings are provided by way of illustration and are not intended to limit the present invention. Furthermore, the present invention covers all the possible combinations of particular and preferred embodiments indicated herein.

### Brief Description of the Drawings

A series of drawings which aid in better understanding the invention and are expressly related to an embodiment of said invention presented as a non-limiting example thereof is very briefly described below.

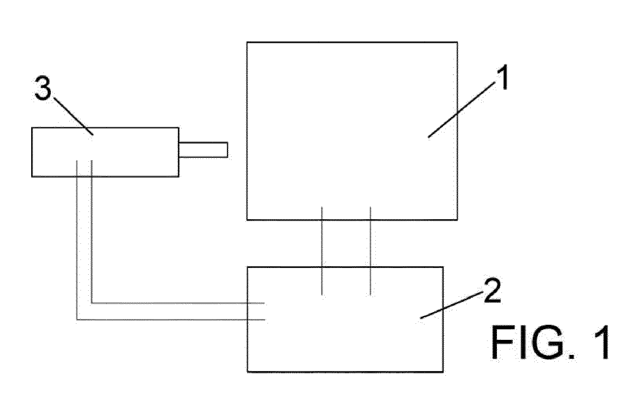

Figure 1 shows an operating diagram of the battery locking device object of the present invention.

### Preferred Embodiment of the invention

The battery locking device object of the present invention is characterized in that it comprises electronic means (2) connected with the battery (1) the state of which is to be known by means of a plurality of cables. Said electronic means (2) essentially consist of a signal conditioner circuit for the signal from the battery (1) and a voltage divider providing a fixed voltage value (23.9 V in this preferred embodiment), the output of both circuits, i.e., the fluctuating signal of the battery (1) and the fixed voltage value, being connected as inputs of a third comparator circuit. Finally, the output of the comparator, which ranges between the voltage levels of a logic 0 (preferably 0 V) and a logic 1 (preferably 5 V), depending on if the voltage in the battery (1) is greater or less than the fixed voltage value, will be connected with an input of a microcontroller, which is in turn connected with a bistable solenoid controlled by two relays, such that the solenoid is activated when the voltage value of the battery is less than the fixed voltage value, releasing a fastener (3) fixing the battery (1) to the frame of the machine where the battery is mounted.

The fastener (3), such as for example a spring or a piston, consists of a fixed part fixed to the frame of the machinery and a moving part which is responsible for performing the movement to release the battery (1).

The device works by directly connecting the cables to the positive and negative terminals of the battery (1) which are connected with the input of the signal conditioner circuit, as indicated, providing a signal (in voltage) that logically fluctuates depending on the level of charge of the mentioned battery. This signal is in turn connected with a first input of a voltage comparator circuit.

On the other hand, the voltage divider, which provides a fixed threshold voltage value corresponding approximately to the characteristic fixed threshold voltage value of the battery for a 25% level of charge and estimated to be 23.9 V in this practical embodiment, is connected with a second input of the voltage comparator circuit.

The output of the comparator circuit provides a voltage value corresponding with a logic 0 (0 V) or a logic 1 (5 V), as indicated. Obviously, if the technology used was different, the output values could be adapted to said technology. This output signal is connected with an input of the microcontroller, logic 0 corresponding with a voltage value in the battery exceeding the threshold value (i.e., the fixed voltage value) and logic 1 corresponding with a voltage value in the battery less than said threshold value.

The microcontroller is responsible for making the decisions to lock (logic 0) or release the battery (logic 1). The circuit analyzes the state of the output of the comparator circuit every second for a cycle time estimated to be about one minute. If during said cycle time the number of samples obtained and classified as low battery was sufficient, it is considered a low battery cycle. This cycle is repeated in blocks of five cycles, and if all these cycles were considered low battery cycles for the last five cycles, the battery (1) is released by actuating the relays feeding the bistable solenoid and one of the light emitting diodes (LEDs) aiding to visually distinguishing the state of the lock (3) is activated.

In another practical embodiment, two relays directly transmitting the voltage of the battery (1) to the bistable solenoid are activated, such that if the volts are applied in a positive manner between the terminals, displacement in one direction is obtained, and if this is inverted, displacement in the opposite direction is obtained.

The bistable solenoid maintains its state even in the absence of electric current; this is indispensable because when the battery (1) in the machine is being changed, said solenoid will be voltage-free and there should be no change in the fastener (3), such as a piston or a spring for example, because if the solenoid was in an extended position while in standby (electric current-free) when changing the battery (1), it would be extended and prevent being able to insert the new battery (1). If the solenoid was in a drawn back position while in standby, the device could readily be tampered with by removing the feed terminals and it would be retracted, releasing it.

In another practical embodiment, the spring has a return element in its moving part and a thrust shaft associated with a metal washer in the part fixed to the frame, wherein said shaft is associated with an electromagnetic suction cup responsible for performing movement to "release" the spring.

In another non-limiting practical embodiment, the electromagnetic suction cup is replaced with a magnetic suction cup.

The device will only work when it detects the presence of the battery (1); to that end, said battery (1) presses against a toggle switch which closes the circuit and transmits the signal to the microcontroller. The purpose is so that the device only works by means of the cycle count when it is certain that the battery (1) is duly installed in the machine.

Furthermore, the device is provided with a manual release mechanism for manually releasing the fastener (3) by means of a key-type switch, so an authorized operator could release the fastener (3) at will.

## Claims

1. A battery locking device, comprising electronic means (2) connected with the battery (1), which state is to be known, by means of a plurality of cables, and that at the same time controls a fastener (3) than keeps the battery (1) secured to the mentioned trolley, and **characterized in that**
said electronic means (2) consist of a signal conditioner circuit of the signal coming from the battery (1) and
a voltage divider that provides a fixed voltage value that corresponds with a threshold charging voltage value of said battery (1),
being the output of both circuits, i.e., the fluctuating signal from the battery (1) and the fixed voltage value, connected as inputs of a third comparator circuit;
and where the output of the comparator, which ranges between the voltage levels of a logic 0 and a logic 1 depending on if the voltage in the battery (1) is greater or less than the fixed voltage value established as threshold, is connected with an input of a microcontroller,
microcontroller which is in turn connected to a bistable solenoid controlled by two relays, such that the solenoid is activated when the voltage value of the battery (1) is less than the fixed voltage value, releasing the fastener (3) that fixes the battery to the frame of the machine where it is mounted and activating a warning.

2. The device according to claim 1, wherein the battery (1) presses against a toggle switch which closes the signal of the electronic means (2) and transmits the signal to the microcontroller.

3. The device according to claim 1, wherein the fastener (3) consists of a fixed part fixed to the frame of the machinery and a moving part that can move to release the battery (1).

4. The device according to claim 1, wherein the fastener (3) has a return element in its moving part and a thrust shaft associated with a metal washer in the part fixed to the frame, all of which is associated with an electromagnetic suction cup that is responsible for releasing the fastener (3).

5. The device according to claims 1 and 3, wherein the suction cup is a magnetic-type suction cup.

6. The device according to the preceding claims, wherein it incorporates a manual release mechanism for manually releasing the fastener (3) by means of a key-type switch.

7. A battery locking method, of the type implemented in the device according to claim 1, comprising at least the steps of (i) establishing the instantaneous charging voltage value of the battery (1) and comparing it with a voltage value corresponding with the minimum charging threshold of the battery; and (ii) determining if the instantaneous voltage value in the battery (1) is higher or lower than the threshold voltage for an estimated cycle time, such that if the result indicates that the battery is low for five cycles, and if all these cycles were considered low battery cycles for the last five cycles, the battery (1) is released by actuating relays feeding a bistable solenoid releasing a fastener (3) and activating a warning signal.
